# EUROPEAN PATENT APPLICATION

(11) **EP 4 446 035 A1**
(43) Date of publication of application: **16.10.2024**
(21) Application number: 24153179.7
(22) Date of filing: 22.01.2024
(51) Int. Cl.: B22F 5/00, B22F 5/04, B22F 5/10, B22F 10/14, B22F 10/68, B29C 64/165, B29C 64/35, B33Y 10/00, B33Y 40/20, B33Y 80/00, B08B 1/12, B08B 5/02, B08B 7/02, B08B 9/032

(54) **METHODS OF SEALING ADDITIVELY PRINTED CHANNELS AND PORTS**

(30) Priority: 10.04.2023 US 202318297926
(71) Applicant: General Electric Technology GmbH, 5400 Baden (CH)
(72) Inventor: DICINTIO, Richard M., Greenville, 29615 (US); KOTTILINGAM, Srikanth C., Greenville, 29615 (US); VANTASSEL, Brad, Greenville, 29615 (US)
(74) Representative: Openshaw & Co.

(57) **Abstract**

A method of manufacturing a target component (150) is disclosed. The method includes inputting (302), into an additive manufacturing system (100), instructions for manufacturing a desired target component (150), wherein the target component (150) includes at least one internal channel (152); inputting a location of at least one port (160) to be formed that extends from an external surface (151) of the target component (150) to the at least one internal channel (152); printing (306), using the additive manufacturing system (100), the target component (150) including the at least one port (160) to form a green body target component (150); and depowdering (308) the at least one internal channel (152) by accessing the at least one port (160) formed on the green body target component (150) to facilitate removing any residual powder from the at least one internal channel (152).

## Description

Development of the present subject matter was supported in part by Cooperative Agreement No. DE-FE00316111, awarded by the United States Department of Energy. Accordingly, the United States Government may have certain rights in this invention.

### BACKGROUND

The present disclosure relates generally to additive manufacturing systems and, more particularly, to methods of sealing additively printed ports and channels.

Binder jetting additive manufacturing (BJAM) selectively sprays a CAD-determined pattern of binder solution (e.g., liquid glue) across a power bed to form a target component. That layer is then overcoated with a fresh layer of powder, and the jetting process is repeated until the target component is complete. The printed target component generally undergoes a curing process during which time the binder solution is solidified within the powder to form a green body (e.g., as-printed, unfired) target component. The green body target component subsequently undergoes a debinding process in which heat is used to decompose and remove the binder from the green body target component such that a brown body (e.g., partially-fired) target component is formed. The brown body target component then undergoes a sintering process wherein the powder particles are consolidated to form a final target component.

Certain types of target components can include internal features, such as cooling channels, to enhance the performance and/or durability of the target components. Such channels may be formed during the jetting and printing process, and unbound powder is subsequently removed from the internal defined channels of the green body target component (in a process known as "depowdering") prior to debinding and sintering. For example, to depowder an internal channel of a green body target component, a pressure gradient (e.g., a positive pressure or a vacuum) may be applied or induced within a first external opening of an internal channel of the green body target component to create a rapid movement of gas (e.g., air) through the internal channel to remove unbound powder from a second exterior opening of the channel. Alternatively, a vacuum probe, an ultrasonic wand, and/or an abrasive wire brush may be inserted into an external opening to remove unbound powder.

Depending on the complexity of internal features of a green body target component and/or the orientation of the channel, depowdering can be a challenging and/or time-consuming process. For example, internal channels may be circuitous (e.g., serpentine and/or tortuous), which can cause unbound powder to become undesirably lodged in portions of the internal channel, resulting in irregularities in the size and shape of the internal channel after sintering. Moreover, since the unbound powder is typically removed from an exterior opening of an internal channel during depowdering, the exterior openings may become damaged during depowdering. As a result, internal channels fabricated in this manner have traditionally been limited in internal features and/or size.

Accordingly, there is a need for an improved additive manufacturing system and methods of operating the same for target components that include complex internal channels defined therein.

### SUMMARY

In one aspect, a method of manufacturing a target component is disclosed. The method includes inputting, into a binder jetting additive manufacturing system, instructions for manufacturing a desired target component. The target component includes at least one internal channel defined at least by a circuitous path including at least one bend. The method further includes printing the target component via a binder jet additive manufacturing process to form a green body target component. During the printing, at least one port is formed that extends from an external surface of the target component to the at least one internal channel. The method further includes depowdering the at least one internal channel by accessing the at least one port formed on the green body target component.

In another aspect, a method of manufacturing a target component is disclosed. The method includes inputting, into an additive manufacturing system, instructions for additively manufacturing a desired target component. The target component includes at least one internal channel. The method further includes inputting a location of at least one port to be formed that extends from an external surface of the target component to the at least one internal channel. The method further includes printing the target component to form a green body target component. The method further includes depowdering the at least one internal channel by accessing the at least one port of the green body target component to facilitate removing any residual powder from the at least one internal channel.

### BRIEF DESCRIPTION OF THE DRAWINGS

The subj ect-matter of the disclosure will be explained in more detail in the following text with reference to exemplary embodiments which are illustrated in the attached drawings.
FIG. 1 is a schematic of an exemplary binder jetting additive manufacturing system;
FIG. 2 is a schematic representation of an exemplary target component prior to sintering;
FIG. 3 is a detailed representation of DETAII, A (shown in FIG. 2) of the target component of FIG. 2;
FIG. 4 is a detailed representation of DETAII, A (shown in FIG. 2) of the target component of FIG. 2 and including tapered ports;
FIG. 5 is a detailed representation of DETAII, A (shown in FIG. 2) of the target component of FIG. 2 and including angled ports;
FIG. 6 is a schematic representation of an exemplary target component after brazing of preformed plugs into the ports; and
FIG. 7 illustrates an exemplary method of manufacturing the target component of FIGS. 2 through 6.

The reference symbols used in the drawings, and their meanings, are listed in summary form in the list of reference symbols. In principle, identical target components are provided with the same reference symbols in the figures.

### DETAILED DESCRIPTION

In the following specification and the claims, reference will be made to a number of terms, which shall be defined to have the following meanings.

As used herein, the singular forms "a," "an," and "the" include plural references unless the context clearly dictates otherwise. The terms "comprising," "including," and "having" are intended to be inclusive and mean that there may be additional elements other than the listed elements. The terms "optional" or "optionally" means that the subsequently described event or circumstance may or may not occur, and that the description includes instances where the event occurs and instances where it does not.

Unless otherwise indicated, approximating language, such as "generally," "substantially," and "about," as used herein indicates that the term so modified may apply to only an approximate degree, as would be recognized by one of ordinary skill in the art, rather than to an absolute or perfect degree. Accordingly, a value modified by a term or terms, such as "about," "approximately," and "substantially," is not to be limited to the precise value specified and is intended to encompass values within ±10% of the stated value. In at least some instances, the approximating language may correspond to the precision of an instrument for measuring the value. Here and throughout the specification and claims, range limitations may be identified. Such ranges may be combined and/or interchanged, and include all the sub-ranges contained therein unless context or language indicates otherwise.

Additionally, unless otherwise indicated, the terms "first," "second," etc. are used herein merely as labels, and are not intended to impose ordinal, positional, or hierarchical requirements on the items to which these terms refer. Moreover, reference to, for example, a "second" item does not require or preclude the existence of, for example, a "first" or lower-numbered item or a "third" or higher-numbered item.

As used herein, the terms "additive manufacturing" or "additive manufacturing techniques or processes" refer to manufacturing processes in which successive layers of material are deposited on top of each other to build-up, layer-by-layer, a three-dimensional component. The successive layers are then partially melted or fused together to form a monolithic or integral component.

As used herein, the terms "binder jetting" or "binder jet additive manufacturing" refer to an additive manufacturing technique that uses a binder (e.g., glue) to join particles of a powder together to form a three-dimensional object. In particular, the binder is selectively deposited (or jetted) across successive layers of the powder in a build volume, wherein layers of the powder and the binder adhere to one another to form a three-dimensional object. The powder may be particulate of materials such as, for example, polymers, metals, metal alloys, ceramics, or the like. The binder-printed target component may be referred to as a "green body target component," which may be subjected to subsequent thermal processing to provide a densified final target component. For example, the green body target component may be inserted into a sintering furnace that heats the green body target component to elevated temperatures (e.g., greater than or equal to about 500° C.) to remove the binder materials and to solidify the powder particles to one another.

As used herein, the phrase "green body target component" refers to a binder-printed target component or workpiece that has not undergone heat treatment to remove a binder. Green body target components may include particulate material that has not been consolidated through heating to a sintering temperature of the particulate material. Green body target components consolidate during sintering when heated to a sufficient temperature to form densified, post-sintering target components that have strong mechanical properties. As such, green body target components may have relatively lower solid density and greater porosities (e.g., greater than or equal to 50% and less than or equal to 70%) than post-sintering target components (e.g., greater than or equal to 92%, or even greater than or equal to 98%).

The term "sintering," as used herein, refers to heating a green body target component to an elevated temperature. Sintering of the green body target component may occur in one or multiple stages. For example, in some embodiments, sintering may include heating the green body target component to a first elevated temperature to induce thermal decomposition of at least a portion of a binder used to print the green body target component. The green body target component may then be additionally heated to a second elevated temperature that is higher than the first elevated temperature to consolidate powder particles together to form a post-sintering, consolidated target component.

The methods, systems, and apparatus described herein are directed to a method of manufacturing a target component. The method includes providing the target component in a binder jetting system, wherein the target component includes at least one internal channel and a circuitous path defined by one or more bends in the internal channel. Ports are then provided to extend from external surfaces of the target component, such that the ports are in fluid communication with the at least one internal channel to facilitate depowdering of the at least one internal channel. The at least one internal channel is then depowdered via the ports of the target component. The method further includes sintering the green body target component and subsequently brazing the ports to seal preformed plugs within the ports using brazed material. It is understood that the embodiments described herein may be used in depowdering channels that do not include bends or circuitous paths.

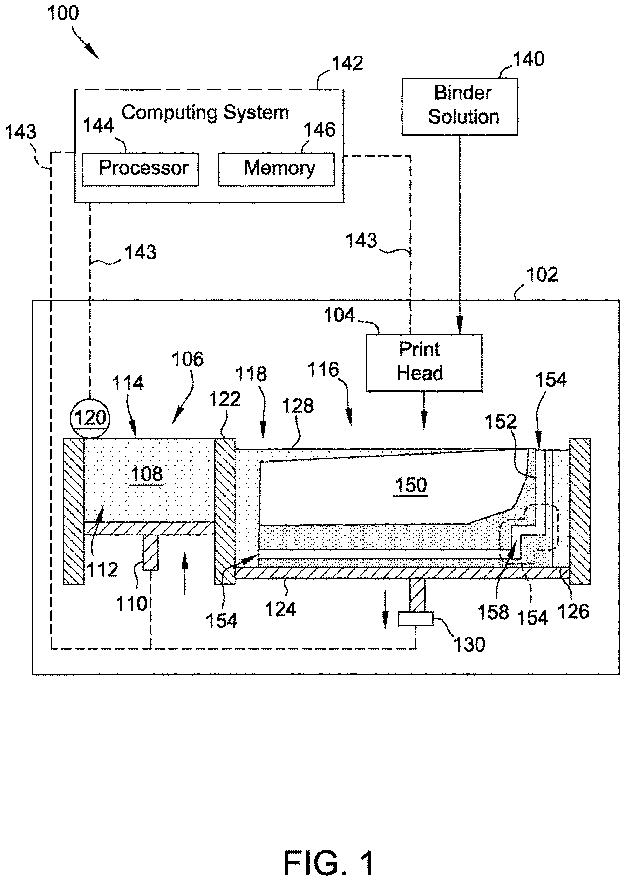

FIG. 1 is a schematic of an exemplary additive manufacturing system 100 used to manufacture (or print) a green body target component 150 via binder jetting. In the exemplary embodiment, the target component 150 includes at least one internal channel 152 having at least two openings 154 and a circuitous (e.g., serpentine, tortuous) path 156 extending at least partially between the two openings 154. The circuitous path 156 is defined by one or more bends 158 in the internal channel 152.

The methods described herein may be applied to a variety of components. By way of example, the target component 150 may be an inner end wall or an outer end wall of a gas turbine nozzle, as may be used in the expansion turbine portion of a gas turbine engine. Similarly, the target component 150 may be a turbine shroud for use in the expansion turbine portion of a gas turbine engine.

As shown, the additive manufacturing system 100 includes a housing 102, a print head 104, a powder supply assembly 106, and a build chamber 116 within the housing 102. The powder supply assembly 106 includes a supply of powder 108. The powder supply assembly 106 also includes a powder piston 110 positioned within a supply chamber 112 containing the powder 108. The powder piston 110 may be selectively raised within the supply chamber 112, thereby forcing a portion of the powder 108 out of the powder supply chamber 112 through a powder supply opening 114. A recoater 120, such as a roller or a blade/wiper, is operable to move across the powder supply opening 114 to force the powder 108 expelled from the powder supply chamber 112 across a work surface 122 and into the build chamber 116 through an opening 118.

The additive manufacturing system 100 also includes a build platform 124 within the build chamber 116. The build platform 124 has a planar build surface 126 that supports the green body target component 150 being printed, and a powder bed 128 including excess powder 108 from the powder supply chamber 112 (i.e., powder 108 that is moved into the build chamber 116, but is not used to print the green body target component 150). The build platform 124 is moveable relative to the print head 104 along a build direction (i.e., the build platform 124 can be raised or lowered by a platform actuator 130 operatively coupled to the build platform 124) to enable a height of the green body target component 150 to be selectively varied during printing. During printing of the green body target component 150, the recoater 120 spreads a layer of the powder 108 expelled from the powder supply chamber 112 across the build surface 126 of the build platform 124 (or across the previously laid powder bed 128, in the case of subsequent layers). The print head 104 then selectively deposits a binder solution 140 across the layer of the powder 108 that is representative of a layer of the green body target component 150 being printed.

The additive manufacturing system 100 may include any suitable number of print heads 104. For example, in the illustrated embodiment, the additive manufacturing system 100 includes a single print head 104. However, in alternative embodiments, the additive manufacturing system 100 may include two or more print heads 104. A plurality of layers of powder 108 are applied across the build surface 126, and the print head 104 selectively deposits the binder solution 140 in a pattern across each of the layers of powder 108 in succession. The build platform 124 is lowered before each application of the layer of the powder 108 and after the binder solution 140 is selectively deposited.

The additive manufacturing system 100 also includes a computing system 142 coupled to one or more system components (e.g., the print head 104, the powder piston 110, the recoater 120, and/or the platform actuator 130) of the additive manufacturing system 100 to enable the computing system 100 to electronically or automatically control their operation. In general, the computing system 142 may include one or more processor-based devices, such as a given controller or computing device or any suitable combination of controllers or computing devices. Thus, in some embodiments, the computing system 142 may include one or more processor(s) 144 and associated memory device(s) 146 configured to perform a variety of computer-implemented functions.

As used herein, the term "processor" refers not only to integrated circuits referred to in the art as being included in a computer, but also refers to a controller, a microcontroller, a microcomputer, a programmable logic circuit (PLC), an application specific integrated circuit, and other programmable circuits. Additionally, the memory device(s) 146 of the computing system 142 may generally comprise memory element(s) including, but not limited to, a computer readable medium (e.g., random access memory RAM)), a computer readable non-volatile medium (e.g., a flash memory), a floppy disk, a compact disk-read only memory (CD-ROM), a magneto-optical disk (MOD), a digital versatile disk (DVD) and/or other suitable memory elements. Such memory device(s) 146 may generally be configured to store suitable computer-readable instructions that, when implemented by the processor(s) 144, configure the computing system 142 to perform various computer-implemented functions, such as one or more aspects of the methods and algorithms that will be described herein. In addition, the computing system 142 may also include various other suitable components, such as a user interface, communications circuit or module, one or more input/output channels, a data/control bus and/or the like.

The various functions of the computing system 142 may be performed by a single processor-based device or may be distributed across any number of processor-based devices. In such instances, such processor-based devices may cooperatively form a target component. For example, the functions of the computing system 142 may be distributed across multiple application-specific controllers, such as an additive manufacturing device controller, a controller(s)/computing device(s) of a remote device(s) (e.g., a laptop, a desktop, a server, etc.), and/or the like.

In the exemplary embodiment, the computing system 142 is coupled to each of the powder piston 110, the recoater 120, and the platform actuator 130 via communicative links 143. System 142 controls the operation of the components of the additive manufacturing system 100 in printing the green body target component 150. For example, the computing system 142 may cause the powder piston 110 and the recoater 120 to cooperate in providing powder 108 from the powder supply chamber 112 that is deposited across the build surface 126. Similarly, system 142 may cause the print head 104 to selectively deposit the binder solution 140 across a layer of powder 108 spread across the build surface 126, control the platform actuator 130 to selectively raise or lower the build platform 124, and so on.

The computing system 142, for example, may store CAD models of the green body target component 150 in the memory device(s) 146 and control the print head to print the green body target component 150 based on the CAD models. Additionally, or alternatively, the computing system 142 may receive (e.g., from a user interface) input(s) of a desired geometrical shape of the green body target component 150

After an entirety of an intended structure of the green body target component 150 is formed using the additive manufacturing system 100, the plurality of layers of the powder 108 having the binder solution 140 deposited thereon and therein may be heated to a curing temperature (e.g., greater than or equal to about 25° C. and less than or equal to about 100° C.) to cause at least a portion of a solvent in the binder solution 140 to evaporate. Heat may be applied to the printed green body target component 150 using an IR lamp and/or heated plate (e.g., on-machine), or may be created by placing the printed green body target component 150 in an oven (e.g., off-machine). After curing, the binder bonds the plurality of layers of the powder 108 together. Suitable binders include, but are not limited to, thermoplastic binders, thermoset binders, and non-polymeric binders such as waxes and sugars (e.g., glucose, fructose, derivatives thereof, or a combination thereof).

After formation and curing, the green body target component 150 (which, at this stage, may be referred to as a brown body target component 150) may be inserted into a sintering furnace (not depicted) for compaction of the brown body target component 150. To sinter the brown body target component 150, the brown body target component 150 is heated within the sintering furnace (not depicted) to a suitable elevated temperature for a suitable time duration. In various embodiments, sintering of the body target component 150 may occur in multiple stages. For example, in some embodiments, sintering may include heating the brown body target component 150 to a suitable first elevated temperature (for a suitable first time duration) to induce thermal decomposition of at least a portion of a binder used to print the target component 150 (e.g., to "de-bind" the brown body target component 150). The brown body target component 150 may then be heated above a second elevated temperature that is higher than the first elevated temperature to consolidate powder particles to form a post-sintering, consolidated target component.

Prior to sintering and de-binding, the target component 150 is depowdered to remove unbound powder 108 from the at least one internal channel 152 of the target component 150. In some embodiments, a pressure gradient (e.g., positive pressure or vacuum) is applied to at least one of the two openings 154 that the internal channel 152 extends between, to create a rapid movement of gas (e.g., air) through the internal channel 152. The rapid flow of gas through the internal channel 152 facilitates removing unbound powder 108 from the internal channel 152. Alternatively, an ultrasonic wand or an abrasive wire brush may be inserted into at least one of the at least two openings 154 to dislodge unbound powder 108 from the at least one internal channel 152.

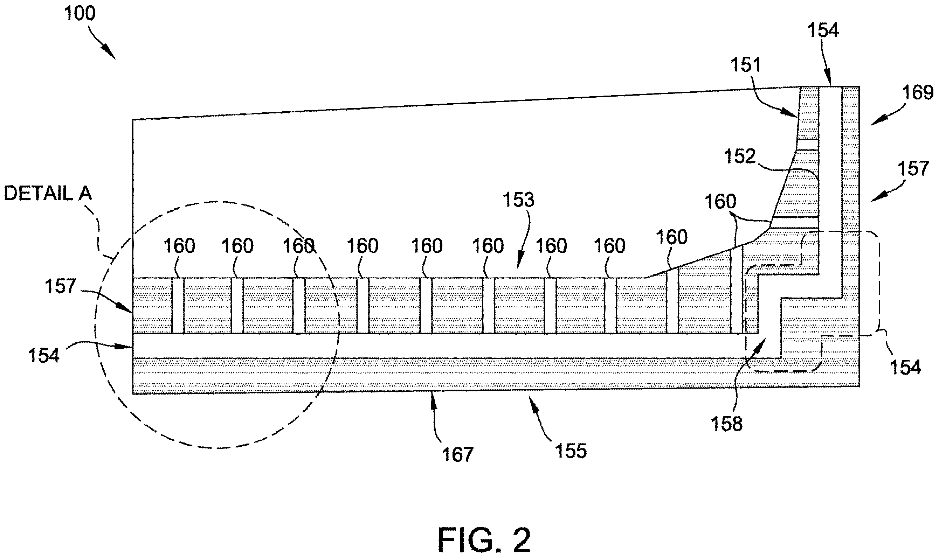

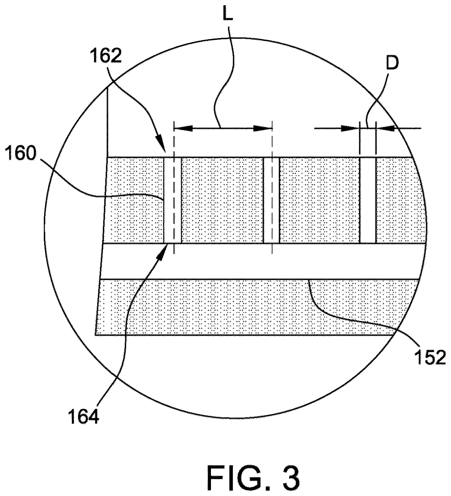

FIG. 2 is a schematic representation of the target component 150 prior to sintering and de-binding, and FIG. 3 is a detailed representation of DETAII, A (shown in FIG. 2). As shown in the exemplary embodiment, ports 160 extend substantially normal to the internal channel 152 and/or the external surface 151 of the target component 150 to facilitate depowdering of the internal channel 152. The ports 160 are incorporated into the CAD model and are fabricated during the layering and printing process along with the target component 150. The ports 160 each have a first opening 162 defined by an external surface 151 of the target component 150, and a second opening 164 in fluid communication with the at least one internal channel 152. In the illustrated embodiment, the first openings 162 of ports 160 each extend from an upper surface 153 of the target component 150.

In some embodiments, the first openings 162 of the ports 160 each extend from a lower surface 155 or from lateral surfaces 157 of the target component 150. In some embodiments, the port openings 162 extend from multiple surfaces depending on the geometry and the complexity of the target component 150 and depending on the geometry and complexity of the internal channel 152. It is understood that, while the figures illustrate two-dimensional representations, the target component 150 is a three-dimensional solid object, and the first openings 162 of the ports 160 can extend from any surface such that internal channel 152 extends between the second openings 164 and the first openings 162, and such that at least one opening 162 or 164 of each channel 152 is accessible by an operator or a user for use in depowdering the internal channel 152. As best shown in FIG. 3, in the exemplary embodiment, each of the ports 160 has a diameter D and is separated from an adjacent port 160 by a separation distance L. The separation distance L is measured from a central axis of each port 160.

As explained in further detail below, the ports 160 are plugged and brazed after sintering the target component 150. However, as the ports 160 are plugged, the plugged ports 160 create stress-points on the target component 150. As a result, the number of ports 160, the diameter D of the ports 160, and the distance L between ports 160 are each optimized to provide adequate access to the internal channel 152 for depowdering, without adversely impacting or effecting the structural integrity of the at least one component 150. The ports 160 enable internal channels 152 having complex geometries, smaller diameters, and sharper bends 158, to be reliably depowdered.

In some embodiments, the ports 160 are each sized with the same diameter D. In some embodiments, the diameters D of the ports may vary relative to one another depending on the complexity of the target component 150 and depending on the surfaces 151 in which the first opening 162 is defined. By way of example, a narrow region 169 of the target component 150 may have ports 160 formed with a diameter D that is smaller than a diameter D of ports formed in a wider region 167 of the target component 150. In some embodiments, the diameters D of the ports 160 are in the range of about 0.03 in (about 0.7 mm) to about 0.8 in (about 20 mm). It is understood that regions of the target component 150 that exhibit less stress under normal operating conditions may have ports 160 formed with larger diameters D. It is also understood that larger target components 150 may have relatively larger ports 160.

Likewise, in some embodiments, the separation distance L (also referred to as pitch distance) between adjacent ports 160 is substantially the same (i.e., are substantially equi-spaced) across the target component 150 or a portion of the target component 150. In other embodiments, the separation distances L can vary depending on the complexity of the target component 150 and depending on the complexity of each of the internal channels 152 within the component 150. By way of example, a channel 152 having a circuitous path 156 may require more ports 160 within the circuitous portion of the path 156 to provide adequate access for depowdering, and thus have a smaller separation distance L defined between adjacent ports 160 as compared to those portions of internal channels 152 formed with less bends 158 within the target component 150. In some embodiments, the separation distances L defined between adjacent ports 160 may be in the range of about 0.5 in (about 12 mm) to about 4 in (about 100 mm). In some embodiments, the separation distances L between adjacent ports 160 are preferably about 1.2 in (about 30 mm). It is understood that regions of the target component 150 that are subjected to less stresses under normal operating conditions may have ports 160 with larger separation distances L.

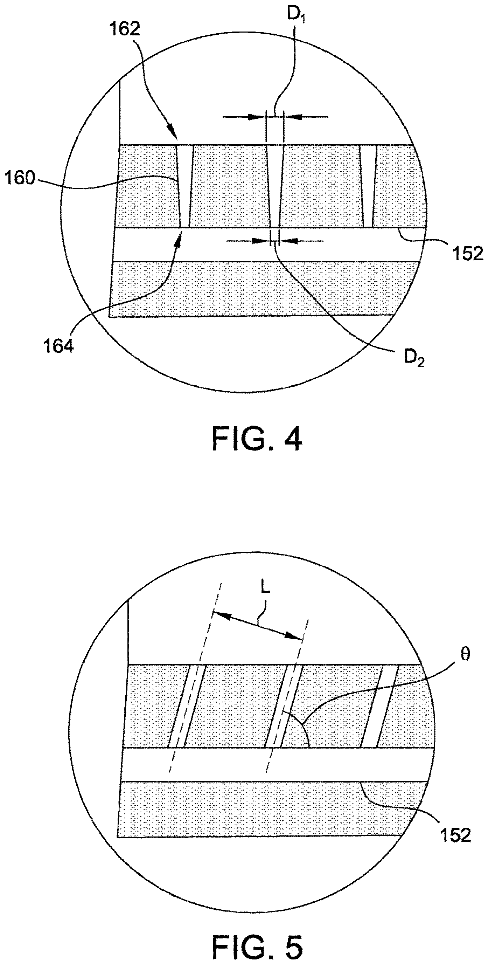

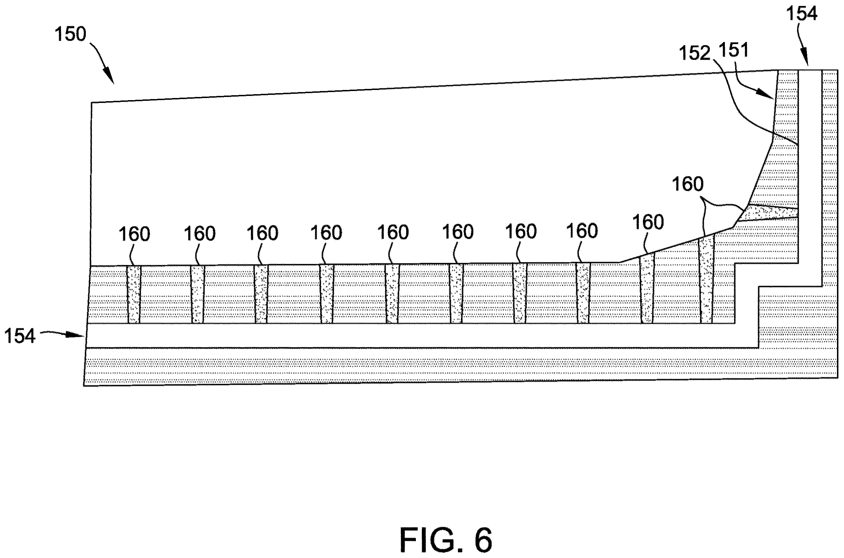

As shown in FIG. 4, the ports 160 are preferably tapered to facilitate improving plugging and brazing of the ports 160. More specifically, in the exemplary embodiment, the ports 160 are formed with a frustoconical shape wherein the first opening 162 has a diameter D1 that is wider than a diameter D2 of the second opening 164. The diameter D2 is sized and oriented to provide adequate access to the at least one internal channel 152 for depowdering. As shown in FIG. 5, in some embodiments, at least one of the ports 160 is formed obliquely at an angle θ relative to the internal channel 152 to facilitate depowdering. Obliquely oriented ports 160 may be utilized to facilitate enhanced access to the internal channel 152 for depowdering. In some embodiments, the ports 160 are both angled and tapered. As shown in FIG. 6, after depowdering, the ports 160 are subsequently filled with preformed plugs 161, which are securing within the ports via brazing. As a result, the circuitous path 156 is open only at oppositely disposed access openings 154.

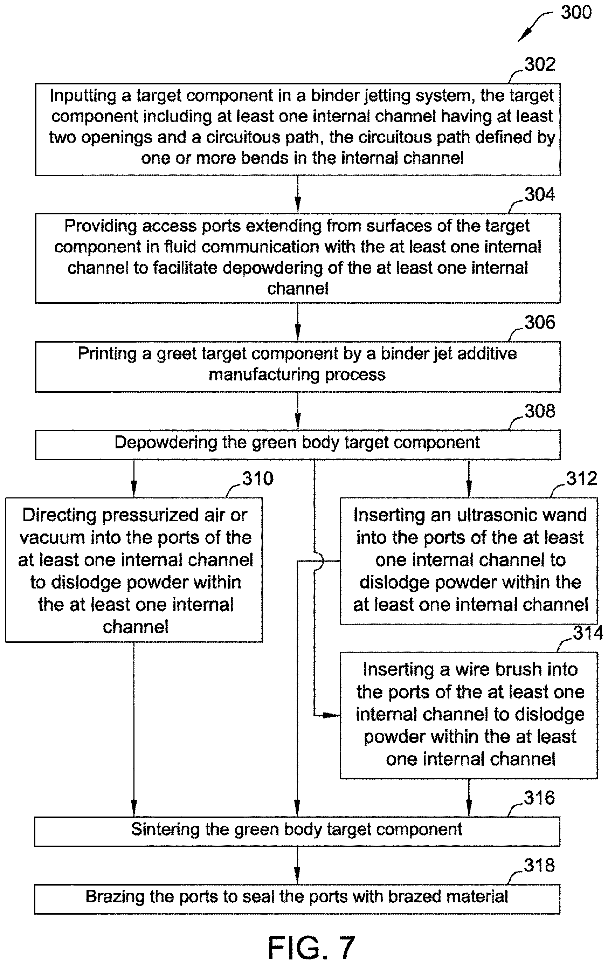

An exemplary method 300 of manufacturing a target component 150 is described with reference to FIG. 7, and further with reference to FIGS. 1-6. In the exemplary embodiment, the method 300 includes inputting 302 instructions for manufacturing a desired target component, such as component 150, in a binder jetting system, in which the desired target component 150 includes at least one internal channel 152 defined therein. The at least one internal channel 152, as described above, includes at least two access openings 154 and, in the exemplary embodiment, a circuitous path 156 that extends at least partially between the two openings 154. The method 300 further includes providing 304 access ports, such as ports 160, that each extend from an external surface of the target component 150 and that are in fluid communication with the at least one internal channel 152 to facilitate depowdering of the internal channel 152.

The method 300 further includes printing 306 a green body target component 150 via a binder jet additive manufacturing process. Binder jet additive manufacturing to print 306 the green body target component 150 may be performed using the additive manufacturing system 100 or any other suitable additive manufacturing system. As described above, the green body target component 150 is printed 306 on a build surface, such as surface 126. A recoater, such as recoater 120, spreads a layer of powder 108 across the build surface 126, and a print head, such as head 104, selectively deposits a binder solution 140 across the layer of powder 108. The process is repeated and successive layers of powder 108 are spread across the build surface 126, and binder solution 140 is selectively deposited across each layer of the powder 108.

After printing 306 the green body target component 150, the method 300 includes depowdering 308 the green body target component 150. Depowdering 308 is performed by at least one of: directing 310 pressurized air or pulling a vacuum through the ports 160 of the at least one internal channel 152 to dislodge residual powder within the internal channel 152; inserting 312 an ultrasonic wand into the ports 160 of the internal channel 152 to dislodge residual powder within the at least one internal channel 152; and inserting 314 a wire brush into the ports 160 of the at least one internal channel 152 to dislodge residual powder within the at least one internal channel 152.

After depowdering 308 the at least one internal channel 152, the method 300 further includes sintering 316 the green body target component 150 and brazing 318 the ports 160 to seal preformed plugs 161 within the ports 160 using brazed material.

The embodiments described herein successfully address at least some disadvantages of binder jetting additive manufacturing when fabricating components including internal circuitous channels. The target components are printed with ports that are formed in fluid communication with the circuitous channels. In some embodiments, the ports may be tapered and/or angled, such that the circuitous channels may be easily accessed after printing to be depowdered. The inclusion of such access ports for depowdering the circuitous channels enables intricate internal channels having complex geometries, smaller diameters, and sharper bends to be produced and reliably depowdered without the risk of remnants of powder residing in the channels after printing becoming inadvertently sintered and securely formed within the channels. As a result of the reliable depowdering techniques described herein, the overall structural integrity of the component produced with complex internal channels is effectively maintained.

It is to be understood that the above description is intended to be illustrative and not restrictive. For example, the above-described embodiments (and/or aspects thereof) may be used in combination with each other. In addition, many modifications may be made to adapt a particular situation or material to the teachings of the subject matter set forth herein without departing from its scope. While the dimensions and types of materials described herein are intended to define the parameters of the disclosed subject matter, they are by no means limiting and are example embodiments. Many other embodiments will be apparent to those of ordinary skill in the art upon reviewing the above description. The scope of the subject matter described herein should, therefore, be determined with reference to the appended claims, along with the full scope of equivalents to which such claims are entitled. In the appended claims, the terms "including" and "in which" are used as the plain-English equivalents of the respective terms "comprising" and "wherein." Moreover, in the following claims, the terms "first," "second," and "third," etc. are used merely as labels, and are not intended to impose numerical requirements on their objects. Further, the limitations of the following claims are not written in means-plusfunction format and are not intended to be interpreted based on 35 U.S.C. § 112(f), unless and until such claim limitations expressly use the phrase "means for" followed by a statement of function void of further structure.

This written description uses examples to disclose several embodiments of the subject matter set forth herein, including the best mode, and also to enable a person of ordinary skill in the art to practice the embodiments of the disclosed subject matter, including making and using the devices or systems and performing the methods. The patentable scope of the subject matter described herein is defined by the claims and may include other examples that occur to those of ordinary skill in the art. Such other examples are intended to fall within the scope of the claims if they have structural elements that do not differ from the literal language of the claims, or if they include equivalent structural elements with insubstantial differences from the literal language of the claims.

The methods, systems, and compositions disclosed herein are not limited to the specific embodiments described herein, but rather, steps of the methods, elements of the systems, and/or elements of the compositions may be utilized independently and separately from other steps and/or elements described herein. For example, the methods, systems, and compositions are not limited to practice with only a rotary machine as described herein. Rather, the methods, systems, and compositions may be implemented and utilized in connection with many other applications.

Although specific features of various embodiments may be shown in some drawings and not in others, this is for convenience only. Moreover, references to "one embodiment" in the above description are not intended to be interpreted as excluding the existence of additional embodiments that also incorporate the recited features. In accordance with the principles of the disclosure, any feature of a drawing may be referenced and/or claimed in combination with any feature of any other drawing.

While the present system and methods have been described in terms of various specific embodiments, those skilled in the art will recognize that the subject technology can be practiced with modification within the spirit and scope of the claims.

The present system and method may be defined by the following exemplary clauses:
According to a first aspect, a method of manufacturing a target component includes: inputting, into a binder jetting additive manufacturing system, instructions for manufacturing a desired target component, wherein the target component includes at least one internal channel defined at least by a circuitous path including at least one bend; printing the target component via a binder jet additive manufacturing process to form a green body target component, wherein during the printing at least one port is formed that extends from an external surface of the target component to the at least one internal channel; and depowdering the at least one internal channel by accessing the at least one port formed on the green body target component.

According to the previous aspect, the method further includes at least one of: directing pressurized air through the at least one port to facilitate dislodging residual powder remaining within the at least one internal channel, inserting an ultrasonic wand into the at least one port to facilitate dislodging residual powder remaining within the at least one internal channel, and inserting a wire brush into the at least one port to facilitate dislodging residual powder remaining within the at least one internal channel.

According to any of the previous aspects, the method further includes sintering the green body target component after the residual powder has been removed from the at least one internal channel.

According to any of the previous aspects, the method further includes brazing the at least one port to seal the at least one port with brazed material after the residual powder has been removed from the at least one internal channel and after sintering the green body target component.

According to any of the previous aspects, the method further includes forming at least one port that is oriented substantially normal to the external surface of the target component to facilitate depowdering of the at least one internal channel.

According to any of the previous aspects, the method further includes forming at least one port that is obliquely oriented relative to the external surface of the target component to facilitate depowdering of the at least one internal channel.

According to any of the previous aspects, the method further includes forming the ports having a tapered shape such that a first end of each of the ports has a diameter greater than a diameter of a second end of each of the ports, the second end in fluid communication with the at least one internal channel.

According to any of the previous aspects, the step of printing the target component further includes: forming a plurality of ports that each extend from an external surface of the target component to the internal channel formed within the target component, wherein the plurality of ports are substantially equi-spaced.

According to any of the previous aspects, the step of printing the target component further includes: forming a plurality of ports that each extend from an external surface of the target component to the internal channel formed within the target component, wherein the plurality of ports are separated by variable distances across the target component.

According to any of the previous aspects, the step of printing the target component further includes: forming a plurality of ports spaced apart by a separation distance in the range of about 0.5 in (about 12 mm) to about 4 in (100 mm), and forming a plurality of ports having a diameter in the range of about 0.03 in (about 0.7 mm) to about 0.8 in (about 20 mm).

According to a second aspect, a method of manufacturing a target component includes: inputting, into an additive manufacturing system, instructions for additively manufacturing a desired target component, wherein the target component includes at least one internal channel; inputting a location of at least one port to be formed that extends from an external surface of the target component to the at least one internal channel; printing the target component to form a green body target component; and depowdering the at least one internal channel by accessing the at least one port of the green body target component to facilitate removing any residual powder from the at least one internal channel.

According to the previous aspect, the method further includes at least one of: directing pressurized air through the at least one port to facilitate dislodging residual powder remaining within the at least one internal channel; inserting an ultrasonic wand into the at least one port to facilitate dislodging residual powder remaining within the at least one internal channel; and inserting a wire brush into the at least one port to facilitate dislodging residual powder remaining within the at least one internal channel.

According to any of the previous aspects, the method further includes sintering the green body target component after the residual powder has been removed from the at least one internal channel.

According to any of the previous aspects, the method further includes brazing the at least one port to seal the at least one port with brazed material after the residual powder has been removed from the at least one internal channel and after sintering the green body target component.

According to any of the previous aspects, the method further includes forming at least one port that is oriented substantially normal to the external surface of the target component to facilitate depowdering the at least one internal channel.

According to any of the previous aspects, the method further includes forming at least one port that is obliquely oriented relative to the external surface of the target component to facilitate depowdering of the at least one internal channel.

According to any of the previous aspects, the method further includes forming the ports having a tapered shape such that a first end of each of the ports has a diameter greater than a diameter of a second end of each of the ports, the second end in fluid communication with the at least one internal channel.

According to any of the previous aspects, the step of printing the target component further includes: forming the at least one channel with a circuitous path including at least one bend; and forming a plurality of ports that each extend from an external surface of the target component to the at least one internal channel formed within the target component, wherein the plurality of ports are substantially equi-spaced.

According to any of the previous aspects, the step of printing the target component further includes: forming the at least one channel with a circuitous path including at least one bend; and forming a plurality of ports that each extend from an external surface of the target component to the at least one internal channel formed within the target component, wherein the plurality of ports are separated by variable distances across the target component.

According to any of the previous aspects, the step of printing the target component further includes: forming a plurality of ports spaced apart by a separation distance in the range of about 0.5 in (about 12 mm) to about 20 in (508 mm), and forming a plurality of ports having a diameter in the range of about 0.03 in (about 0.7 mm) to about 0.8 in (about 20 mm).

## Claims

1. A method of manufacturing a target component (150) comprising:
inputting (302), into an additive manufacturing system (100), instructions for additively manufacturing a desired target component (150), wherein the target component (150) includes at least one internal channel (152);
inputting a location of at least one port (160) to be formed that extends from an external surface (151) of the target component (150) to the at least one internal channel (152);
printing (306), using the additive manufacturing system (100), the target component (150) including the at least one port (160) to form a green body target component (150); and
depowdering (308) the at least one internal channel (152) by accessing the at least one port (160) of the green body target component (150) to facilitate removing any residual powder from the at least one internal channel (152).

2. The method of claim 1, wherein the additive manufacturing system is a binder jetting system.

3. The method of claim 1, further comprising at least one of:
directing (310) pressurized air through the at least one port (160) to facilitate dislodging residual powder remaining within the at least one internal channel (152);
inserting (312) an ultrasonic wand into the at least one port (160) to facilitate dislodging residual powder remaining within the at least one internal channel (152); and
inserting (314) a wire brush into the at least one port (160) to facilitate dislodging residual powder remaining within the at least one internal channel (152).

4. The method of claim 1, further comprising:
sintering (316) the green body target component (150) after the residual powder has been removed from the at least one internal channel (152).

5. The method of claim 4, further comprising:
brazing (318) the at least one port (160) to seal the at least one port (160) with brazed material after the residual powder has been removed from the at least one internal channel (152) and after sintering the green body target component (150).

6. The method of claim 1, further comprising at least one of:
forming at least one port (160) that is oriented substantially normal to the external surface (151) of the target component (150) to facilitate depowdering (308) the at least one internal channel; and
forming at least one port (160) that is obliquely oriented relative to the external surface (151) of the target component (150) to facilitate depowdering (308) of the at least one internal channel (152).

7. The method of claim 1, further comprising forming the ports (160) having a tapered shape such that a first end (162) of each of the ports (160) has a diameter (D1) greater than a diameter (D2) of a second end (164) of each of the ports (160), the second end (164) in fluid communication with the at least one internal channel (152).

8. The method of claim 1 wherein printing (306) the target component (150) further comprises:
forming the at least one internal channel (152) with a circuitous path (156) including at least one bend (158); and
forming a plurality of ports (160) that each extend from an external surface (151) of the target component (150) to a respective internal channel of the at least one internal channel (152) formed within the target component (150), wherein the plurality of ports (160) is substantially equally spaced.

9. The method of claim 1, wherein printing (306) the target component (150) further comprises:
forming the at least one internal channel (152) with a circuitous path (156) including at least one bend (158); and
forming a plurality of ports (160) that each extend from an external surface (151) of the target component (150) to a respective internal channel of the at least one internal channel (152) formed within the target component (150), wherein the plurality of ports (160) is separated by variable distances (L) across the target component (150).

10. The method of claim 1, wherein printing (306) the target component (150) further comprises: forming a plurality of ports (160) spaced apart by a separation distance (L) in the range of about 12 mm to about 100 mm; and forming a plurality of ports (160) having a diameter (D) in the range of about 0.7 mm to about 20 mm.

11. A turbine component (150) having at least one internal channel and at least one port in communication with the at least one internal channel, wherein the turbine component (150) is produced by the method of any of claims 1 to 10.

12. The turbine component of claim 11, wherein the turbine component is one of: an inner end wall of a turbine nozzle, an outer end wall of a turbine nozzle, or a turbine shroud.
